# EUROPÄISCHE PATENTSCHRIFT

(11) **EP 3 011 359 B1**
(45) Veröffentlichungstag und Bekanntmachung des Hinweises auf die Patenterteilung: **06.05.2020**
(21) Anmeldenummer: 14725995.6
(22) Anmeldetag: 22.05.2014
(51) Int. Cl.: G01S 15/93, G01S 15/02, G01S 15/87, B60W 30/06, G10K 9/122, G01S 7/52

(54) **ULTRASCHALLBASIERTER MESSSENSOR UND VERFAHREN ZUM BETREIBEN EINES ULTRASCHALLBASIERTEN MESSSENSORS**
ULTRASONIC-BASED MEASURING SENSOR AND METHOD FOR OPERATING AN ULTRASONIC-BASED MEASURING SENSOR
CAPTEUR DE MESURE À ULTRASONS ET PROCÉDÉ DE FONCTIONNEMENT D'UN CAPTEUR DE MESURE À ULTRASONS

(30) Priorität: 18.06.2013 DE 102013211419
(43) Veröffentlichungstag der Anmeldung: 27.04.2016
(73) Patentinhaber: Robert Bosch GmbH, 70442 Stuttgart (DE)
(72) Erfinder: SCHOENHERR, Michael, 71272 Renningen-Malmsheim (DE); SCHNEIDER, Marcus, 71642 Ludwigsburg (DE)
(86) Internationale Anmeldenummer: PCT/EP2014/060563
(87) Internationale Veröffentlichungsnummer: WO 2014/202328

(56) Entgegenhaltungen:
- DE-A1- 3 719 146
- DE-A1-102010 028 009
- US-A- 5 844 471

## Beschreibung

### Stand der Technik

Die Erfindung betrifft einen ultraschallbasierten Meßsensor sowie ein Verfahren zum Betreiben eines ultraschallbasierten Meßsensors nach den Oberbegriffen der beiden unabhängigen Ansprüche.

Ein derartiger ultraschallbasierter Meßsensor ist aus der DE 10 2010 027 780 A1 der Anmelderin bekannt, wobei ein Membranelement mit einem Piezoelement verbunden ist, das über eine Steuereinheit angesteuert wird. Ein derartiger Meßsensor kann nicht nur zur Abstandsmessung zwischen einem Fahrzeug und einem Objekt verwendet werden, um beispielsweise einen Einparkvorgang zu erleichtern, sondern auch als Totwinkelsensor, wie dies aus der DE 10 2007 053 033 A1 bekannt ist. Da derartige Meßsensoren mit ihrem Membranelement unmittelbar den Umgebungsbedingungen ausgesetzt sind und darüber hinaus oftmals auch an exponierten Stellen, beispielsweise im Bereich des Stoßfängers angeordnet sind, neigen die Membranelemente bei entsprechenden Umgebungsbedingungen insbesondere zur Verschmutzung, oder aber bei tiefen Temperaturen zur Vereisung. Zwar können derartige Zustände üblicherweise durch entsprechende Signalauswerteschaltungen bzw. Auswertelogiken erkannt werden, so dass ein Fahrer beispielsweise auf eine mangelhafte Funktion bzw. eine Fehlfunktion des Meßsensors hingewiesen werden kann, jedoch ist während der Zeit der Fehlfunktion die gewünschte Information (Distanz zu einem Objekt bzw. Objekte im Totwinkel) nicht verfügbar. Im Falle einer Verschmutzung des Membranelements ist es daher erforderlich, das Membranelement von dem Schmutz zu befreien. Im Falle von Vereisungen wäre es denkbar, den Meßsensor mit einer entsprechenden Heizeinrichtung zu versehen, die eine Beheizung des Membranelements bewirkt. Eine derartige, aus der DE 10 2007 037 213 A1 bei einem Radarsensor bekannte Lösung scheidet jedoch bei den gattungsgemäßen ultraschallbasierten Meßsensoren aus wirtschaftlichen Gründen aus, da die Zusatzinvestitionen für eine derartige Heizvorrichtung mit Blick auf die Gesamtherstellungskosten relativ hoch sind. Darüber hinaus sind aus der DE 10 2010 028 009 A1 der Anmelderin, der DE 37 19 146 A1 sowie der US 5,844,471 ultraschallbasierte Messsensoren bekannt, die jeweils von dem Membranelement separate Heizeinrichtungen aufweisen, die dazu ausgebildet sind, bei Erkennung von Vereisung eine Erwärmung des Membranelements zu bewirken, um insbesondere Eisbelag zu entfernen. Nachteilhaft hierbei ist jedoch ebenfalls die durch zusätzliche Bauteile realisierte separate Heizeinrichtung, die damit die Herstellkosten der Messsensoren erhöht .

### Offenbarung der Erfindung

Ausgehend von dem dargestellten Stand der Technik liegt der Erfindung die Aufgabe zugrunde, einen ultraschallbasierten Meßsensor sowie ein Verfahren zum Betreiben eines ultraschallbasierten Meßsensors nach den Oberbegriffen der beiden unabhängigen Ansprüche derart weiterzubilden, dass Vereisungen am Membranelement, insbesondere infolge tiefer Außentemperaturen, entweder erst gar nicht auftreten, oder aber in relativ kurzer Zeit beseitigt werden können, damit möglichst stets die Funktionalität des Meßsensors gewährleistet ist. Darüber hinaus soll die Enteisungsfunktion mit möglichst geringen (Zusatz-) Kosten realisierbar sein.

Diese Aufgabe wird erfindungsgemäß bei einem ultraschallbasierten Meßsensor mit den Merkmalen des Anspruchs 1 dadurch gelöst, dass die Ansteuereinheit und/oder das Membranelement dazu ausgebildet sind/ist, einen gegenüber dem Meßmodus geänderten Heizmodus auszuführen, bei dem sich das Membranelement bis auf eine Temperatur erwärmt, die über einer Vereisungstemperatur liegt, und dass der Heizmodus eine gegenüber dem Meßmodus verlängerte oder/und höherfrequente Ansteuerung des Membranelements umfasst. Mit anderen Worten gesagt bedeutet dies, dass das Membranelement durch die Ansteuereinheit derart in Schwingungen versetzt wird, dass sich dieses bis auf eine Temperatur erwärmt, die über der Vereisungstemperatur liegt. Dadurch lassen sich bereits vorhandene Vereisungen von dem Membranelement entfernen bzw. durch eine entsprechende Ansteuerung das Membranelement auf einer derartigen Temperatur halten, dass Vereisungen während des Meßmodus ausgeschlossen werden können. Unter einer verlängerten Ansteuerung des Membranelements wird dabei im Rahmen der Erfindung verstanden, dass eine Schwingungsanregung, die während des Meßmodus eine bestimmte Zeitspanne dauert während des Heizbetriebs bzw. Heizmodus in der Zeitspanne (üblicherweise deutlich) verlängert wird. Unter einer höherfrequenten Ansteuerung wird beispielsweise verstanden, dass eine im Meßmodus zwischen zwei Ansteuerphasen des Membranelements vorhandene Totzeit reduziert wird, während die eigentliche Ansteuerzeit bzw. Schwingungszeit des Membranelements unverändert bleibt. Weiterhin umfasst die Erfindung auch eine Kombination der beiden eben angesprochenen Maßnahmen. Beide gegenüber dem Meßmodus geänderten Parameter bewirken, dass sich das Membranelement aufgrund der in das Membranelement erhöhten eingebrachten elektrischen Leistung deutlich erwärmt.

Vorteilhafte Weiterbildungen des erfindungsgemäßen Verfahrens zum Betreiben eines ultraschallbasierten Meßsensors sind in den Unteransprüchen aufgeführt.

Es sind verschiedene Parameter bzw. Einflussgrößen denkbar, die zu einem Starten bzw. zu einem Durchführen des angesprochenen Heizmodus führen können. Insbesondere ist es dabei wünschenswert, dass Parameter ausgewählt werden, die eine Vereisung bereits im Ansatz verhindern bzw. solche Parameter, die keinen aktiven Eingriff beispielsweise des Fahrers benötigen.

In einer ersten derartigen Ausgestaltung des Verfahrens wird vorgeschlagen, dass der Heizmodus beim Unterschreiten einer auf eine Vereisung hindeutenden Grenztemperatur gestartet wird. Gemeint ist dabei, dass beispielsweise das Signal eines im Kraftfahrzeug vorhandenen Außentemperatursensors verwendet wird, um den Heizmodus zu starten. So kann es beispielsweise vorgesehen sein, dass beim Erkennen einer Außentemperatur von weniger als 4°C der Heizmodus gestartet wird. Selbstverständlich ist es denkbar, die Dauer bzw. die Häufigkeit, mit der der Heizmodus durchgeführt wird, in Abhängigkeit von dem Wert der gemessenen Außentemperatur durchzuführen. Gemeint ist hierbei, dass die Dauer des Heizmodus umso länger ist, je tiefer die erfasste Außentemperatur ist.

Ebenso ist es denkbar, das Signal eines Regensensors zur Ansteuerung des Heizmodus mit zu verwenden. Wird beispielsweise mittels des Regensensors Niederschlag erkannt, und gleichzeitig eine Außentemperatur von beispielsweise weniger als 0° erfasst, so kann darauf auf das Auftreten von Blitzeis geschlossen werden, was ebenfalls den Heizmodus aktiviert.

Eine weitere vorteilhafte Ausgestaltung des Verfahrens sieht vor, dass der Heizmodus in Abhängigkeit eines von dem Meßsensor im Meßmodus erzeugten Signals gesteuert wird. Gemeint ist hiermit, dass aus dem Signalverlauf bzw. dem Signalmuster des Sensors erkannt wird, dass mit einer gewissen Wahrscheinlichkeit eine Vereisung vorliegt, so dass der Heizmodus gestartet wird.

Anstelle eines externen Temperatursensors kann es auch vorgesehen sein, dass der Heizmodus gestartet wird, wenn der Meßsensor ein Maß für seine interne Temperatur liefert und dieses Maß auf eine Vereisung (Temperatur z.B. kleiner als 0°C) schließen lässt.

Zusätzlich kann es vorgesehen sein, dass das Verfahren in Abhängigkeit des Fahrzeugzustandes, insbesondere der Fahrzeuggeschwindigkeit, gesteuert wird. So ist es beispielsweise denkbar, dass das Verfahren (Heizmodus) angewandt wird, wenn das Kraftfahrzeug eine Mindestgeschwindigkeit unterschreitet oder ein Bremsvorgang stattfindet und gleichzeitig z.B. die Umgebungstemperatur unter einem bestimmten Wert ist.

Eine weitere, vorteilhafte Ausgestaltung des Verfahrens sieht vor, dass der Heizmodus zum Durchführen eines Messbetriebs unterbrochen wird. Gemeint ist hierbei, dass der Heizmodus beispielsweise in Abhängigkeit von der detektierten Umgebung betrieben wird. Detektiert der Meßsensor beispielsweise ein Objekt in einem bestimmten Mindestabstand (z.B. in weniger als 1m Entfernung), dann wird der Heizmodus nicht oder nur kurz (z.B. einige Sekunden) durchgeführt, da der entsprechende Meßsensor weiterhin Daten liefern soll, die beispielsweise den Einparkvorgang steuern bzw. erleichtern.

Alternativ zu dem zuletzt aufgeführten Verfahren ist es auch denkbar, dass der Heizmodus in Abhängigkeit der Betätigung eines von einem Bediener aktivierbaren Betätigungselements erfolgt. Dabei kann es beispielsweise vorgesehen sein, dass der Fahrer einen entsprechenden Hinweis auf einen vereisten Meßsensor in seiner Cockpitanzeige erhält, die der Fahrer durch Betätigung eines entsprechenden Knopfes beispielsweise bestätigt, so dass der Heizmodus gestartet wird.

Zusätzlich kann es vorgesehen sein, dass der Heizmodus gestartet wird, wenn z.B. ein kamerabasiertes Rückfahrsystem Eis auf der Stoßstange bzw. Eis/Schnee in der Umgebung detektiert.

Ebenso ist es denkbar, dass das Verfahren in Abhängigkeit von elektronisch verbreiteten Wetterlageninformationen in Kombination mit der über GPS bzw. einem Navigationsgerät erfassten Fahrzeugpositionen gesteuert wird.

Üblicherweise umfasst ein Fahrzeug mehrere ultraschallbasierte Meßsensoren. So ist es bei Parksensoren üblich, beispielsweise insgesamt sechs Parksensoren im Bereich des Stoßfängers anzuordnen, wobei einige Meßsensoren beispielsweise in Fahrtrichtung ausgerichtet sind, während sich andere Meßsensoren in den Eckbereichen des Stoßfängers befinden. Weiterhin sind Totwinkelsensoren, falls vorhanden, als besonders sicherheitsrelevant einzustufen. Die Erfindung umfasst daher auch eine Anordnung von mehreren ultraschallbasierten Meßsensoren in einem Kraftfahrzeug, wobei wenigstens einer der Meßsensoren auf erfindungsgemäße Art und Weise ausgebildet bzw. betrieben wird. Erfindungsgemäß kann es dabei vorgesehen sein, dass nur diejenigen Meßsensoren auf erfindungsgemäße Art und Weise mit einem Heizmodus betrieben werden, die besonders wichtig eingestuft sind, beispielsweise die bereits erwähnten Sensoren in den Eckbereichen des Stoßfängers oder aber ein Totwinkelsensor.

Zusammengefasst zeichnet sich die Erfindung dadurch aus, dass in der Regel ohne zusätzliche Komponenten, alleine durch eine entsprechende Ansteuerung des Membranelements eine Aufheizung des Membranelements erzielbar ist. Derartige Verfahren lassen sich sehr einfach softwaretechnisch realisieren und benötigen ggf. lediglich aufgrund des verlängerten Betriebs ein angepasstes Membranelement bzw. eine angepasste Ansteuereinheit.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine stark vereinfachte Darstellung eines mit mehreren ultraschallbasierten Meßsensoren ausgerüsteten Kraftfahrzeugs,
- Fig. 2: den Einbauort eines Meßsensors im Bereich des Stoßfängers eines Kraftfahrzeugs im Schnitt,
- Fig. 3 und Fig. 4: Diagramme zur Verdeutlichung der Ansteuerung eines erfindungsgemäßen Meßsensors während des Meß- sowie des Heizmodus,
- Fig. 5: den Temperaturverlauf des Meßsensors über der Zeit während des Heizbetriebs in Form eines Diagramms und
- Fig. 6: die Darstellung des Abschlusses eines Heizbetriebs, ebenfalls in Form eines Diagramms.

Gleiche Elemente bzw. Elemente mit gleicher Funktion sind in den Figuren mit den gleichen Bezugsziffern versehen.

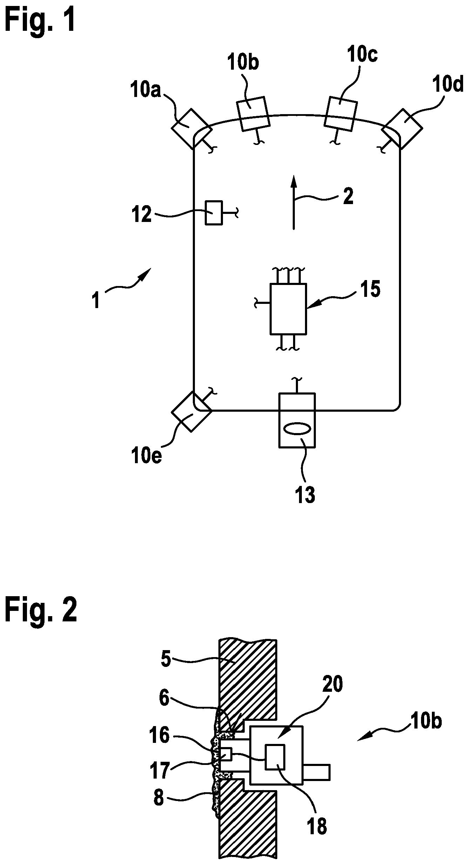

In der Fig. 1 ist ein Kraftfahrzeug 1 dargestellt, in dessen Front- sowie vorderen Eckbereichen insgesamt vier ultraschallbasierte Meßsensoren 10a bis 10d angeordnet sind. Ein weiterer, ultraschallbasierter Meßsensor 10e befindet sich im Heckbereich des Kraftfahrzeugs 1 auf der Fahrerseite, d.h. auf der linken Seite. Die (normale) Fahrtrichtung des Kraftfahrzeugs 1 ist durch den Pfeil 2 gekennzeichnet. Weiterhin weist das Kraftfahrzeug 1 einen Außentemperatursensor 12 sowie eine videobasierte Rückfahrkamera 13 auf, die im Heckbereich des Kraftfahrzeugs 1 angeordnet ist und Auswertungen der Umgebung des Kraftfahrzeugs 1 ermöglicht.

Die angesprochenen Meßsensoren 10a bis 10e, der Außentemperatursensor 12 sowie die Rückfahrtkamera 13 sind beispielhaft mit einer Steuereinrichtung 15 verbunden, die die von den angesprochenen Elementen erzeugten Eingangssignale verarbeitet und diese auch ansteuert. Obwohl lediglich eine Steuereinrichtung 15 dargestellt ist, umfasst eine derartige Steuereinrichtung 15 in der Praxis mehrere, miteinander kommunizierende Steuergeräte.

In der Fig. 2 ist am Beispiel des Meßsensors 10b dessen Einbau in dem vorderen Stoßfänger 5 des Kraftfahrzeugs 1 dargestellt. Man erkennt, dass der Stoßfänger 5 eine Durchgangsöffnung 6 aufweist, in die der Meßsensor 10b hineinragt, wobei der Meßsensor 10b mittels an sich bekannter, und daher nicht dargestellter Haltemittel an dem Stoßfänger 5 befestigt ist. Der Meßsensor 10b umfasst ein Membranelement 16, das beispielhaft mit der Außenseite der Stoßstange 5 zumindest nahezu bündig abschließt. Das Membranelement 16 ist mit einem im Gehäuse des Meßsensors 10b angeordneten Piezoelement 17 gekoppelt, das von einer Steuereinheit 18 angesteuert wird. Die Steuereinheit 18 bildet zusammen mit dem Piezoelement 17 eine Ansteuereinheit 20 für das Membranelement 16 auf. Ein derartiger Meßsensor 10b dient in an sich bekannter, und daher nicht beschriebener, weil nicht erfindungswesentlicher Art und Weise der Detektion des Abstands von im Abstrahlungsbereich des Meßsensors 10b befindlichen Objekten. Insbesondere dient der Meßsensor 10b als Bestandteil eines Parkassistenzsystems des Kraftfahrzeugs 1, um einem Fahrer beispielsweise beim Einparken den Abstand zu einem vor ihm befindlichen Kraftfahrzeug oder Objekt zu signalisieren. Demgegenüber dient der Meßsensor 10e, der prinzipiell identisch zu den Meßsensoren 10a bis 10d ausgebildet ist, der Erfassung eines Totwinkels des Kraftfahrzeugs 1, d.h. eines Bereichs, den der Fahrer beispielsweise mit seinem Rückspiegel nicht einsehen kann.

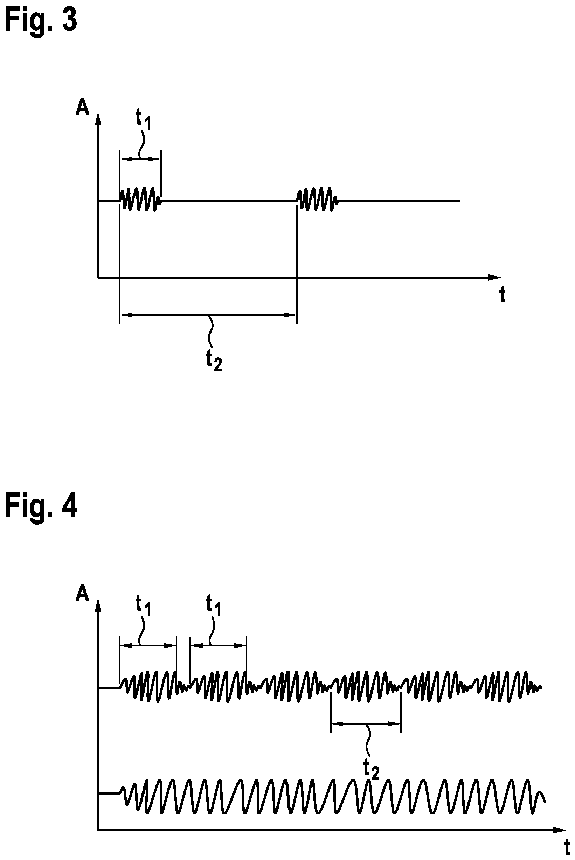

Erfindungsgemäß ist es vorgesehen, dass wenigstens einer der Meßsensoren 10a bis 10e derart ausgebildet ist, dass er neben einem Meßmodus, der dazu dient, die angesprochenen Objekte bzw. deren Abstand zu erkennen, in einem Heizmodus betrieben werden kann. Hierzu wird zunächst auf die Fig. 3 verwiesen, die am Beispiel eines der Meßsensoren 10a bis 10e den Meßmodus des Meßsensors 10a bis 10e erläutert: Man erkennt, dass während einer Zeitspanne t₁ von beispielsweise 300µs das Membranelement 16 durch die Ansteuereinheit 20 zu Schwingungen angeregt wird, was aus dem Schwingungssignal (Amplitude A) des Membranelements 16 erkennbar ist. Die Ansteuerung des Membranelements 16 wiederholt sich jeweils nach einer Zeitspanne t₂ von beispielsweise 30ms.

In dem oberen Graph der Fig. 4 ist ein erster Heizmodus des Meßsensors 10a bis 10e dargestellt, der sich dadurch auszeichnet, dass die Ansteuerung des Membranelements 16 mit gegenüber dem Meßmodus deutlich erhöhter Frequenz bzw. Häufigkeit erfolgt, wobei die eigentlichen Schwingungs- bzw. Anregungsphasen weiterhin jeweils einen Zeitraum von t₁ dauern, während der Zeitraum t₂ beispielsweise anstatt der oben angesprochenen 30ms nur noch 10ms dauert. Die Ansteuerfrequenz hat sich somit verdreifacht. Der obere Heizmodus findet beispielsweise statt, falls die Logik des Meßsensors 10a bis 10e keinen Dauerbetrieb bzw. keine Daueranregung des Membranelements 16 erlaubt.

In dem unteren Graph der Fig. 4 ist demgegenüber ein Dauerbetrieb des Membranelements 16 dargestellt, bei dem das Membranelement 16 von der Ansteuereinheit 20 ständig zu Schwingungen angeregt wird.

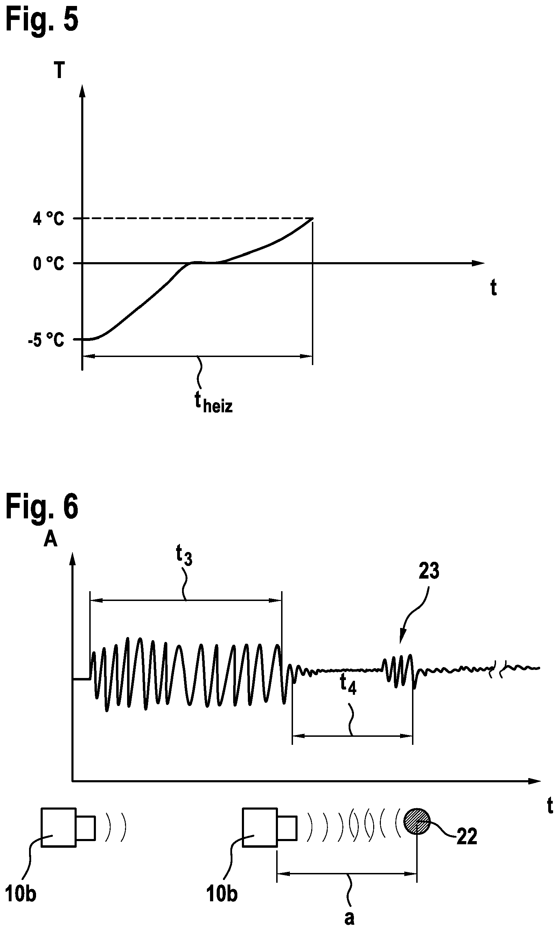

In der Fig. 5 ist der zeitliche Verlauf der Temperatur T an dem Membranelement 16 dargestellt. Man erkennt, dass ausgehend von einer Temperatur von -5°C sich die Temperatur des Membranelements 16 während einer Heizzeit t_{heiz} auf eine Temperatur von beispielhaft 4°C erhöht. Beim Erreichen dieser Temperatur wird beispielsweise der Heizbetrieb bzw. der Heizmodus zumindest zeitweise eingestellt. Die Temperatur genügt, um in der Fig. 2 an dem Membranelement 16 befindliche Vereisungen 8 aufzutauen bzw. zu entfernen. Erklärt werden kann der Effekt der Temperaturerhöhung des Membranelements 16 dadurch, dass während des Heizmodus der mittlere Stromverbrauch des Meßsensors 10a bis 10e derart erhöht wird, dass sich der Meßsensor 10a bis 10e auf eine Temperatur von mehr als 0°C erwärmt, um die Vereisung 8 abzuschmelzen. Bei dem in der Fig. 3 dargestellten Meßmodus des Meßsensors 10a bis 10e beträgt der Pulsanregestrom typischerweise etwa 400mA, so dass während der Zeitspanne t₂ bei einer Impulsdauer von 300µs der mittlere Stromverbrauch 4mA beträgt. Wird entsprechend des unteren Graphs der Fig. 4 eine Daueranregung des Membranelements 16 während des Heizmodus vorgenommen, so beträgt der Dauerstraum 400mA. Die umgesetzte thermische Leistung liegt dann beispielsweise bei einer typischen Sensorspannung von 8 Volt bei 3,2 Watt. Demgegenüber beträgt die umgesetzte thermische Leistung während des Meßmodus nur ca. 0,032 Watt. Bei einem typischen Gewicht des Membranelements 16 von weniger als 5g und Aluminium als Material mit einem Gesamtwirkungsgrad von kleiner 50% würde dies z.B. eine Temperaturerhöhung von 1°C pro Sekunde während des Heizmodus ermöglichen.

Zuletzt ist in der Fig. 6 ein Ausführungsbeispiel dargestellt, bei dem der Meßsensor 10b während einer Zeitspanne t₃ von beispielsweise 1s im Heizmodus betrieben wird. Danach wird der Heizmodus gestoppt, so dass der letzte Ultraschallimpuls an einem Objekt 22 in einem Abstand a reflektiert wird, was im Sensorsignal nach einer Zeitspanne t₄ eine Echoamplitude 23 erzeugt. Die nachgeschaltete Auswerteeinheit bzw. Auswertelogik des Meßsensors 10a bis 10e erkennt die reflektierte Echoamplitude 23 als gültiges Objektecho und klassifiziert den Meßsensor 10a bis 10e als eisfrei ein, da der Meßsensor 10a bis 10e offensichtlich (wieder) in der Lage ist, Umgebungsobjekte zu detektieren. Daher wird der Heizmodus nicht wieder erneut gestartet, sondern der normale Messmodus fortgeführt.

Der soweit beschriebene Meßsensor 10a bis 10e sowie dessen Betriebsverfahren können in vielfältiger Art und Weise abgewandelt bzw. modifiziert werden. Der Erfindungsgedanke besteht in der Möglichkeit, einen Heizmodus durchzuführen, bei dem das Membranelement 16 auf eine Temperatur erhöht wird, die an dem Membranelement 16 ggf. auftretende Vereisungen 8 auflösen bzw. erst gar nicht entstehen lassen. Dies erfolgt durch eine verlängerte oder/und mit einer höheren Frequenz stattfindende Anregung des Membranelements 16.

## Patentansprüche

1. Ultraschallbasierter Meßsensor (10a bis 10e) eines Kraftfahrzeugs (1), wie Abstandssensor oder Totwinkelsensor, mit einem von einer Ansteuereinheit (20) elektrisch zu Schwingungen anregbaren Membranelement (16),
**dadurch gekennzeichnet,**
**dass** die Ansteuereinheit (20) und das Membranelement (16) dazu ausgebildet sind, einen gegenüber dem Meßmodus geänderten Heizmodus auszuführen, bei dem sich das Membranelement (16) bis auf eine Temperatur (T) erwärmt, die über einer Vereisungstemperatur liegt, und dass der Heizmodus eine gegenüber dem Meßmodus verlängerte oder/und höherfrequente Ansteuerung des Membranelements (16) umfasst.

2. Verfahren zum Betreiben eines ultraschallbasierten Meßsensors (10a bis 10e) eines Kraftfahrzeugs (1), wie Abstandssensor oder Totwinkelsensor, bei dem ein elektrisch anregbares Membranelement (16) von einer Ansteuereinheit (20) zu Schwingungen angeregt wird,
**dadurch gekennzeichnet,**
**dass** die Ansteuereinheit (20) und das Membranelement (16) zum Durchführen eines Heizmodus derart betrieben werden/wird, dass sich das Membranelement (16) bis auf eine Temperatur (T) erwärmt, die über einer Vereisungstemperatur liegt, und dass der Heizmodus eine gegenüber einem Meßmodus verlängerte oder/und höherfrequente Ansteuerung des Membranelements (16) aufweist.

3. Verfahren nach Anspruch 2,
**dadurch gekennzeichnet,**
**dass** der Heizmodus beim Unterschreiten einer auf eine Vereisung hindeutenden Grenztemperatur (T) gestartet wird.

4. Verfahren nach Anspruch 2 oder 3,
**dadurch gekennzeichnet,**
**dass** die Dauer (t) des Heizmodus von der Höhe einer von einem Temperatursensor (12) erfassten Umgebungstemperatur und/oder dem Signal eines Regensensors und/oder dem Signal eines Umwelterkennungssensors (13) und/oder von Wetterinformationsdaten in Verbindung mit einer Fahrzeugposition abhängig ist.

5. Verfahren nach einem der Ansprüche 2 bis 4,
**dadurch gekennzeichnet,**
**dass** der Heizmodus in Abhängigkeit eines von dem Meßsensor (10a bis 10e) im Meßmodus erzeugten Signals gesteuert wird.

6. Verfahren nach einem der Ansprüche 2 bis 5,
**dadurch gekennzeichnet,**
**dass** der Heizmodus in Abhängigkeit der Betätigung eines von einem Bediener aktivierbaren Betätigungselements erfolgt.

7. Verfahren nach einem der Ansprüche 2 bis 6,
**dadurch gekennzeichnet,**
**dass** der Heizmodus in Abhängigkeit eines von dem Meßsensor (10a bis 10e) erfassten Signals zur Erfassung einer internen Temperatur gesteuert wird.

8. Verfahren nach einem der Ansprüche 2 bis 7,
**dadurch gekennzeichnet,**
**dass** der Heizmodus zum Durchführen eines Messbetriebs unterbrochen wird.

9. Verfahren nach einem der Ansprüche 2 bis 8,
**dadurch gekennzeichnet,**
**dass** der Heizmodus in Abhängigkeit eines Fahrzustands, insbesondere einer Fahrzeuggeschwindigkeit, gesteuert wird.

10. Anordnung aus mehreren ultraschallbasierten Meßsensoren (10a bis 10e) in
einem Kraftfahrzeug (1), wobei wenigstens einer der Meßsensoren (10a bis 10e) nach Anspruch 1 ausgebildet ist und/oder nach einem Verfahren der Ansprüche 2 bis 9 betrieben wird,
**dadurch gekennzeichnet,**
**dass** nur die Meßsensoren (10a bis 10e) gemäß Anspruch 1 ausgebildet sind und/oder nach einem Verfahren der Ansprüche 2 bis 9 betrieben werden, die als gegenüber anderen Meßsensoren (10a bis 10e) kritische Meßsensoren (10a bis 10e) definiert sind, insbesondere in Eckbereichen des Fahrzeugs (1) angeordnete Abstandssensoren oder Totwinkelsensoren.

## Claims

1. Ultrasonic sound-based measuring sensor (10a to 10e) of a motor vehicle (1), such as a distance sensor or line spot sensor, having a diaphragm element (16) which can be electrically excited to oscillate by an actuation unit (20) ,
**characterized**
**in that** the actuation unit (20) and diaphragm element (16) are designed to implement a heating mode which is modified with respect to the measuring mode and in which the diaphragm element (16) heats up to a temperature (T) which is above a freezing point, and in that the heating mode comprises actuation of the diaphragm element (16) which is prolonged and/or at a higher frequency in comparison with the measuring mode.

2. Method for operating an ultrasound-based measuring sensor (10a to 10e) of a motor vehicle (1), such as a distance sensor or blind spot sensor, in which an electrically excitable diaphragm element (16) is excited to oscillate by an actuation unit (20),
**characterized**
**in that** actuation unit (20) and the diaphragm element (16) are operated to carry out a heating mode in such a way that the diaphragm element (16) is heated to a temperature (T) which is above a freezing point, and in that the heating mode has actuation of the diaphragm element (16) which is prolonged and/or at a higher frequency in comparison with the measuring mode.

3. Method according to Claim 2,
**characterized**
**in that** the heating mode is started when a limiting temperature (T) which indicates icing is undershot.

4. Method according to Claim 2 or 3,
**characterized**
**in that** the duration (T) of the heating mode is dependent on the value of an ambient temperature which is sensed by a temperature sensor (12) and/or the signal of a rain sensor and/or the signal of an environment-detection sensor (13) and/or on weather information data in conjunction with a position of a vehicle.

5. Method according to one of Claims 2 to 4,
**characterized**
**in that** the heating mode is controlled as a function of a signal which is generated by the measuring sensor (10a to 10e) in the measuring mode.

6. Method according to one of Claims 2 to 5,
**characterized**
**in that** the heating mode is implemented as function of the actuation of an activation element which can be activated by an operator.

7. Method according to one of Claims 2 to 6,
**characterized**
**in that** the heating mode is controlled as a function of a signal which is sensed by the measuring sensor (10a to 10e), in order to sense an internal temperature.

8. Method according to one of Claims 2 to 7,
**characterized**
**in that** the heating mode is interrupted in order to carry out a measuring operation.

9. Method according to one of Claims 2 to 8,
**characterized**
**in that** the heating mode is controlled as function of a driving state, in particular of a speed of a vehicle.

10. Arrangement composed of a plurality of ultrasound-based measuring sensors (10a to 10e) in a motor vehicle (1), wherein at least one of the measuring sensor (10 to 10e) is embodied according to Claim 1, and/or is operated according to a method in Claims 2 to 9,
**characterized**
**in that** only the measuring sensors (10a to 10e) are embodied according to Claim 1 and/or are operated according to a method in Claims 2 to 9, which are embodied as measuring sensors (10a to 10e) which are critical in comparison with other measuring sensor (10a to 10e), and are, in particular, distance sensors or blind spot sensors which are arranged in corner regions of the vehicle (1).

## Revendications

1. Capteur de mesure (10a à 10e) ultrasonique d'un véhicule automobile (1), tel qu'un capteur de distance ou un capteur d'angle mort, comprenant un élément formant membrane (16) qui peut être excité électriquement en oscillations par une unité de commande (20),
**caractérisé en ce que**
l'unité de commande (20) et l'élément formant membrane (16) sont configurés pour appliquer un mode de chauffage, modifié par rapport au mode de mesure, avec lequel l'élément formant membrane (16) est chauffé jusqu'à une température (T) qui est supérieure à une température de givrage et
**en ce que** le mode de chauffage comprend une commande prolongée et/ou à fréquence plus élevée de l'élément formant membrane (16) par rapport au mode de mesure.

2. Procédé pour faire fonctionner un capteur de mesure (10a à 10e) ultrasonique d'un véhicule automobile (1), tel qu'un capteur de distance ou un capteur d'angle mort, avec lequel un élément formant membrane (16) excitable électriquement est excité en oscillations par une unité de commande (20),
**caractérisé en ce que**
l'unité de commande (20) et l'élément formant membrane (16) est/sont mis en service pour appliquer un mode de chauffage de telle sorte que l'élément formant membrane (16) soit chauffé jusqu'à une température (T) qui est supérieure à une température de givrage et **en ce que** le mode de chauffage comprend une commande prolongée et/ou à fréquence plus élevée de l'élément formant membrane (16) par rapport à un mode de mesure.

3. Procédé selon la revendication 2, **caractérisé en ce que** le mode de chauffage est démarré en cas de franchissement vers le bas d'une température limite (T) qui indique un givrage.

4. Procédé selon la revendication 2 ou 3, **caractérisé en ce que** la durée (t) du mode de chauffage est dépendante de la valeur d'une température ambiante détectée par une sonde de température (12) et/ou du signal d'un détecteur de pluie et/ou du signal d'un capteur de reconnaissance de l'environnement (13) et/ou de données d'informations météorologiques en association avec une position du véhicule.

5. Procédé selon l'une des revendications 2 à 4, **caractérisé en ce que** le mode de chauffage est commandé en fonction d'un signal généré par le capteur de mesure (10a à 10e) en mode de mesure.

6. Procédé selon l'une des revendications 2 à 5, **caractérisé en ce que** le mode de chauffage est appliqué en fonction d'un actionnement d'un élément d'actionnement qui peut être activé par un opérateur.

7. Procédé selon l'une des revendications 2 à 6, **caractérisé en ce que** le mode de chauffage est commandé en fonction d'un signal détecté par le capteur de mesure (10a à 10e) et destiné à détecter une température interne.

8. Procédé selon l'une des revendications 2 à 7, **caractérisé en ce que** le mode de chauffage est interrompu pour appliquer un mode de mesure.

9. Procédé selon l'une des revendications 2 à 8, **caractérisé en ce que** le mode de chauffage est commandé en fonction d'un état de conduite, notamment d'une vitesse du véhicule.

10. Arrangement constitué de plusieurs capteurs de mesure (10a à 10e) ultrasoniques dans un véhicule automobile (1); au moins l'un des capteurs de mesure (10a à 10e) étant configuré selon la revendication 1 et/ou étant mis en service conformément à un procédé selon les revendications 2 à 9,
**caractérisé en ce que**
seuls sont configurés selon la revendication 1 et/ou étant mis en service conformément à un procédé selon les revendications 2 à 9 les capteurs de mesure (10a à 10e) qui sont définis comme des capteurs de mesure (10a à 10e) critiques par rapport aux autres capteurs de mesure (10a à 10e), notamment les capteurs de distance ou les capteurs d'angle mort disposés dans les zones des coins du véhicule (1).
